# EUROPEAN PATENT APPLICATION

(11) **EP 4 349 575 A1**
(43) Date of publication of application: **10.04.2024**
(21) Application number: 22199945.1
(22) Date of filing: 06.10.2022
(51) Int. Cl.: B29C 70/38, B29C 70/22, B29C 70/88, B64C 3/38, B64C 3/20, B64C 3/26, B29D 99/00, G06F 30/15, B29C 70/16, G06F 111/10, G06F 113/26, B64C 3/44

(54) **AIRCRAFT WINGS COMPRISING AN AEROELASTICALLY TAILORED COMPOSITE STRUCTURE**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

In some examples, a wing for an aircraft, the wing having a passive variable aeroelastic geometry for accommodating efficient flight at multiple aircraft speeds, comprises a wing skin comprising a composite structure comprising a lamination of multiple layers deposited for the wing skin according to a predetermined lamination profile, at least one of the layers comprising a continuous non-linear deposition of material, the wing skin comprising a stiffness distribution profile defined by the lamination profile.

## Description

### FIELD

The present invention relates to wings for aircraft.

### BACKGROUND

The optimal wing sweep of an aircraft, which is defined in terms of the amount by which the wing angles, e.g., backwards (relative to a direction of aircraft travel) from its root, varies based on the desired speed capabilities of the aircraft in question. For example, at take-off speeds, a wing having little to no sweep is preferable. However, a wing with such a sweep will perform poorly as the speed of the aircraft increases making it unsuitable for use in aircraft.

In order to cover a range of possible aircraft speeds, the sweep of some aircraft wings can be modified by pivoting the entire wing. Whilst effective, the mechanical systems required to enable such active variations are expensive and heavy, and generally only suitable for aircraft that change speeds from, e.g., subsonic to supersonic frequently and quickly.

Wing twist is a further aerodynamic feature of aircraft wings that enables a distribution of lift along a wing to be regulated.

With the advent of modern manufacturing processes, aircraft wings can be manufactured to be lighter and stronger using composite and laminate materials for example. Such manufacturing techniques are able to introduce a degree of passive aeroelastic tailoring to aircraft wings, enabling a degree of flexure of the wing that varies in response to changing loads (e.g., as the aircraft in question changes speed).

### SUMMARY

An objective of the present disclosure is to provide a wing having a passive variable aeroelastic geometry for accommodating efficient flight at multiple aircraft speeds.

The foregoing and other objectives are achieved by the features of the independent claims.

Further implementation forms are apparent from the dependent claims, the description and the Figures.

A first aspect of the present disclosure provides a wing for an aircraft, the wing having a passive variable aeroelastic geometry for accommodating efficient flight at multiple aircraft speeds, the wing comprising a wing skin comprising a composite structure comprising a lamination of multiple layers deposited for the wing skin according to a predetermined lamination profile, at least one of the layers comprising a continuous non-linear deposition of material, the wing skin comprising a stiffness distribution profile defined by the lamination profile. The wing can define a relatively low or high aspect ratio. At least one of the layers can comprise carbon fibre. The non-linear deposition of material can comprise a continuous track of material. The continuous track of material can comprise at least one bend having a radius of curvature within range of around 40-100mm.

In an implementation of the first aspect, a shape of the continuous track of material can be defined, at least in part, on the basis of the predetermined lamination profile. The continuous track of material can be formed by way of continuous tow shearing of the material.

A second aspect of the present disclosure provides a method for fabricating a component of a wing for an aircraft, the method comprising depositing a layer of a first material, the layer comprising a non-linear tow of the first material, wherein the first layer of material is deposited as part of a lamination of multiple layers for the component. The non-linear tow of the first material can define a continuous track comprising at least one bend having a radius of curvature within range of around 40-100mm.

In an implementation of the second aspect, the method can further comprise depositing the layer of the first material according to a predetermined lamination profile. The non-linear tow of the first material can be deposited using continuous tow shearing. The non-linear tow of the first material can comprise at least one bend having a radius of curvature within range of around 40-100mm. The method can further comprise depositing a second layer of a second material according to the predetermined lamination profile, the second layer comprising a non-linear tow of the second material comprising at least one bend having a radius of curvature within range of around 40-100mm.

A third aspect of the present disclosure provides a composite structure for a component of a wing for an aircraft, the composite structure comprising a lamination of multiple layers deposited according to a predetermined lamination profile, at least one of the layers comprising a non-linear tow of a first material defining a continuous track comprising at least one bend having a radius of curvature within range of around 40-100mm.

These and other aspects of the invention will be apparent from the embodiment(s) described below.

### BRIEF DESCRIPTION OF THE FIGURES

Embodiments of the invention will now be described by way of example only with reference to the figures, in which:
Figure 1 is a schematic representation depicting a comparison between tow arrangements using tow steering and tow shearing, according to an example;
Figure 2 depicts a system for fabricating a component of a wing for an aircraft, according to an example;
Figure 3 is a schematic representation of a wing for an aircraft, according to an example; and
Figure 4 is a schematic representation of a wing for an aircraft, according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

According to an example, a wing for an aircraft comprises a passive variable aeroelastic geometry. As such, efficient flight can be accommodated at multiple aircraft speeds as the wing can comprise an adaptive compliant wing. For example, efficient flight at multiple different speeds can be achieved without the use of complex, heavy and expensive active systems geared to vary an angle of wing sweep. Furthermore, wing twist can be implemented to provide a desired lift distribution for the wing.

Furthermore, in the context of passive systems, a wing according to an example comprises a wing skin comprising a composite structure formed using a lamination of multiple layers deposited for the wing skin according to a predetermined lamination profile. At least one of the layers comprises a non-linear deposition of material. The wing skin comprises a stiffness distribution profile defined by the lamination profile. The non-linear deposition of material presents an improved passive variable aeroelastic geometry.

The wing enables a platform, such as an aircraft, to comprise a variable airframe geometry, thereby accommodating efficient flight without the need for complex, heavy and expensive active sweep and/or twist modifying structures. In an example, an aircraft can comprise an elongated fuselage, and the wing, which can be an oblique wing, can be connected to the fuselage.

According to an example, the non-linear deposition of material comprises a continuous track of material. The continuous track of material, which may be carbon fibre for example, can be formed by way of continuous tow shearing of the material (a tow comprising, e.g., an untwisted bundle or tape of continuous material filaments). Aligning the filaments along a desired structural load path of the wing can significantly improve its performance without increasing weight. This is in contrast to typical automated fibre placement (AFP) techniques such as tow steering for example, which impose limits on the degree to which tows can be aligned with a desired path, particularly in the case of, e.g., wings having relatively low aspect ratios where smaller radius of curvature can be advantageous. Furthermore, typical AFP techniques can lead to multiple process-induced defects such as local fibre wrinkling, buckling, tow gaps and fibre discontinuities. For example, in AFP techniques such as tow steering, fibres within a tow are aligned parallel to a reference tow path due to head rotation even when the steered tow paths are simply shifted along a specific direction. This produces tow gaps or overlaps, which in turn can lead to resin rich areas or local thickening. Furthermore, the degree to which a tow can be effectively steered before a break in fibres occurs, or before gaps/overlaps become extreme limits its use in creating non-linear tracks of a material.

According to an example, a continuous track of material forming a non-linear deposition of material for a layer can be deposited using a head that also applies an in-plane shear deformation. For example, a tow of the material can be deposited along a first, reference, direction, whilst being sheared in a second orthogonal direction, thereby creating a sinuous track of the material. This also eliminates tow gaps and overlaps because the fibres within the tow are aligned and thus have a constant angle along the second direction.

The shearing of a tow of material enables curvature to be introduced in the continuous track of material such that bends having radii of curvature within range of around 40-100mm are possible. This is far in excess of the radius of curvature that are possible when using, e.g., tow steering. Accordingly, material deposition can follow sinuous tracks according to a predetermined lamination profile that enables a higher stiffness profile for a wing in at least some regions of a corresponding wing skin. As such, a passive variable aeroelastic geometry for a wing can be implemented in situations where the same would otherwise not be possible (e.g., when using fibre placement by tow steering which is effectively in-plane bending as opposed to in-plane shearing). Thus, a lift distribution for a wing can be tailored by depositing a track or tracks using continuous tow shearing in order to define a desired degree of wing twist for example.

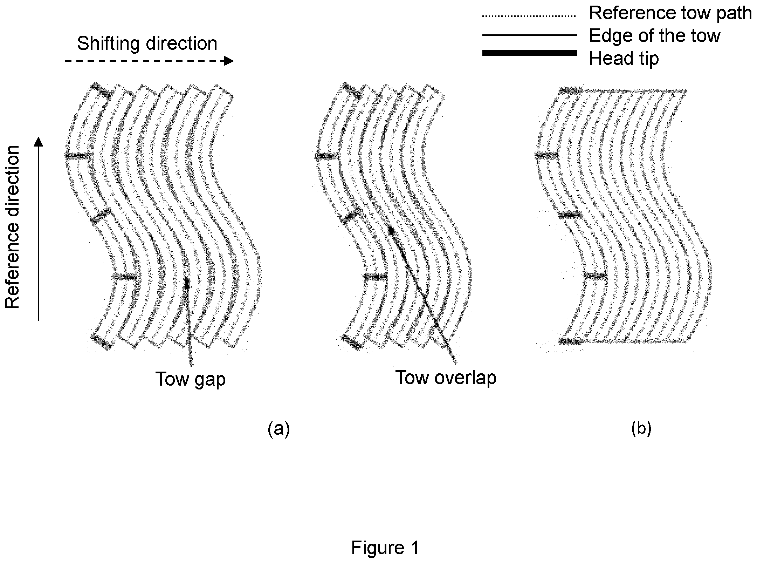

Figure 1 is a schematic representation depicting a comparison between tow arrangements using tow steering and tow shearing, according to an example. Figure 1(a) depicts fibres within a tow having been aligned in a direction parallel to a reference tow path. Figure 1(a) shows the presence of tow gaps and tow overlaps due to head rotation. That is, as a head used to deposit a tow is rotated (as depicted by the thick lines representing the direction of motion of the tip of the head), such that steered tow paths are simply shifted along a specific direction (shifting direction) tow gaps and overlaps are inevitably produced.

Figure 1(b) depicts fibres within a tow having been aligned in a direction parallel to a reference tow path using tow shearing. As can be seen, the orientation of the head tip relative to the reference tow path remains parallel to the shifting direction. Accordingly, no tow gaps or overlaps are present. That is, a fibre placement head applies in-plane shear deformation to the tow material that is supplied continuously by fixing the head rotation while a single strip of tow material is laid, thereby eliminating tow gaps or overlaps since all fibres within a tow are aligned to have a constant angle along the shifting direction.

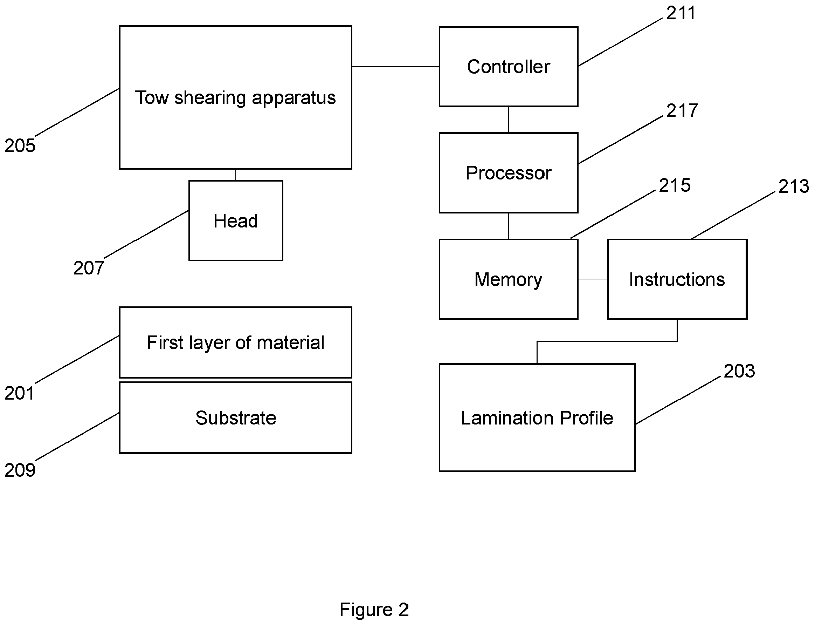

Figure 2 depicts a system for fabricating a component of a wing for an aircraft, according to an example. A layer 201 of a first material is deposited. The first material can comprise carbon fibre for example. In an example, the layer 201 can comprise a non-linear tow of the first material, which can be deposited as part of a lamination of multiple layers for the component. The non-linear tow of the first material defines a continuous track comprising at least one bend having a radius of curvature within range of around 40-100mm.

The layer 201 of the first material can be deposited according to a predetermined lamination profile 203. The non-linear tow of the first material can be deposited by way of continuous tow shearing using a continuous tow shearing apparatus 205. Apparatus 205 can comprise a head 207. The head 207 can be configured to receive a tow of the first material and deposit it onto a substrate 209, for example. The substrate 209 and the head 207 can be moveable relative to one another.

In an example, the head 207 can be translated in a shifting (second) direction relative to a first (reference) direction, which defines a direction of travel of the head 207 (relative to, e.g., the substrate 209). The second direction can be orthogonal to the first direction in order to provoke shearing of the tow of the first material. The first layer of material 201 can be deposited according to a predetermined lamination profile 203. The predetermined lamination profile 203 can define the shape of deposited tow of material for the first layer, and can comprise at least one a straight section and a curved section to deposited material. In an example, a non-linear tow of the first material can comprise at least one bend having a radius of curvature within range of around 40-100mm.

According to an example, a controller 211 can be used to control the position of the head 207. Controller 211 can implement the predetermined lamination profile 203. For example, the predetermined lamination profile 203 can be provided in the form of machine-readable instructions 213, which can be stored in a computer readable storage that can guide the apparatus 205 to operate in a specific mode. For example, the instructions 213 may be provided on a non-transitory computer readable storage medium 215 encoded with instructions, executable by a processor 217 to implement the predetermined lamination profile 203 using the controller 211 to control the position of the head 207 in the second direction as the head 207 and substrate 209 move relative to one another in the first direction.

The term 'processor' is to be interpreted broadly to include a CPU, processing unit, ASIC, logic unit, or programmable gate set etc. The methods and modules may all be performed by a single processor or divided amongst several processors.

According to an example, a second layer of material can be deposited. The second material may be the same or different to the first material. The second material may be deposited according to the predetermined lamination profile, and can comprise a non-linear tow of the second material. The non-linear tow of the second material can comprise at least one bend having a radius of curvature within range of around 40-100mm.

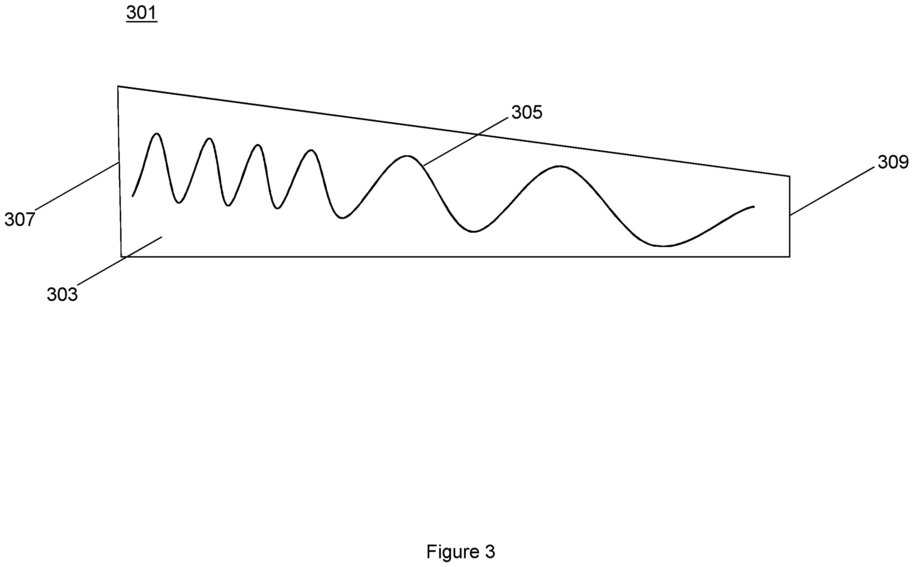

Figure 3 is a schematic representation of a wing for an aircraft, according to an example. In the example of figure 3, the wing 301 has a passive variable aeroelastic geometry for accommodating efficient flight at multiple aircraft speeds and comprises a wing skin 303 comprising a composite structure comprising a lamination of multiple layers deposited for the wing skin according to a predetermined lamination profile. At least one of the layers comprises a continuous non-linear deposition of material. The wing skin 303 comprises a stiffness distribution profile defined by the lamination profile. Accordingly, at least one of, e.g., wing twist and slope can be regulated according to the lamination profile by varying the stiffness distribution of the wing skin.

In the example of figure 3, an example of a continuous non-linear deposition of material 305 (not to scale and highly simplified) is depicted. The non-linear deposition of material 305 comprises a continuous track of material, which in the example of figure 3 is sinuous. It extends generally from the root 307 of the wing 301 (where it attaches to a fuselage) to the tip 309, however, the start and end position of such a track may be any points on the wing skin.

In the example of figure 3, the curvature of the track decreases in a direction from the root 307 to the tip 309. That is, in a direction along the track from the root 307 to the tip 309, the radii of curvature of the bends in the track increase. This can be a gradual, e.g., continuous, decrease, a stepped decrease, or a combination. It will be appreciated, given that the start and end position of such a track may be any points on the wing skin, that the curvature of a track can stay the same, increase or decrease in any direction relative to the orientation of the wing skin. For example, a track can be deposited laterally across a wing skin.

The lamination profile can comprise multiple such tracks, which can be offset or translated from another in any one or more of multiple directions in the plane of the wing skin. In the context of a track deposited using tow shearing, as the angle of shear increases (such as at the bights of the tracks), lateral movement of the tow fibers relative to one another causes the tow/tape width to decrease and thickness to increase. Accordingly, the thickness of the track is locally increased at these points without a corresponding increase in the number of plies of a laminate.

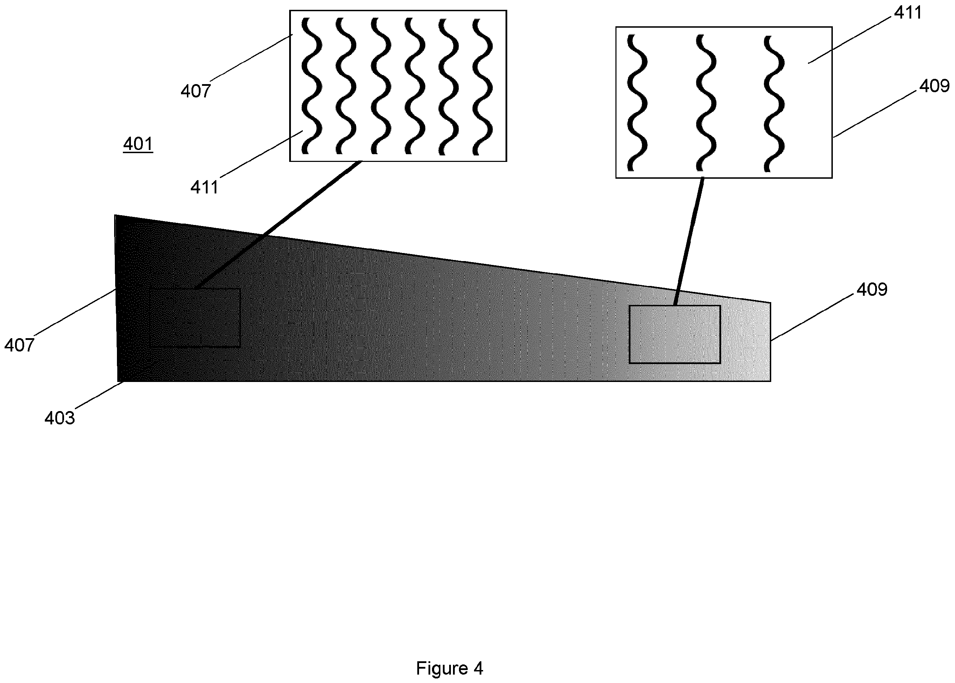

Figure 4 is a schematic representation of a wing for an aircraft, according to an example. In the example of figure 4, the wing 401 has a passive variable aeroelastic geometry for accommodating efficient flight at multiple aircraft speeds and comprises a wing skin 403 comprising a composite structure comprising a lamination of multiple layers deposited for the wing skin according to a predetermined lamination profile. In the example of figure 4, an alternative implementation of a continuous track of material is depicted. More specifically, a continuous track of material extends laterally across the wing skin 407, and multiple such laterally extending continuous tracks 411 of material are provided over the length of the wing skin from its root 407 to its tip 409. A continuous track may extend over one or both of the top and bottom sides of a wing skin.

In an example, the density of the continuous tracks of material can vary along the length of the wing skin. For example, as illustrated by the gradient of figure 4, the density of the continuous tracks of material at the region 407 of the root of the wing is greater (darker) than that (409) at the wing tip (lighter). In an example, the continuous tracks of material may decrease in density and/or degree of curvature in a direction from wing root to tip.

In the case of figure 3 or figure 4, the stiffness of the wing skin 307, 407 will be greater at the wing root than at the wing tip as a result of the differences in thickness of the track/tracks which stems from the degree of curvature implemented by way of the lamination profile. That is, as described above, as the angle of shear increases (such as at the bights of the tracks), lateral movement of the tow fibers relative to one another causes the tow/tape width to decrease and thickness to increase. Accordingly, the thickness of the track is locally increased at these points without a corresponding increase in the number of plies of a laminate. As such, a variation in a stiffness distribution profile defined by the lamination profile can be implemented. That is, the stiffness of the wing skin can be varied by modifying at least one of the density of tracks, degree of curvature or a track or tracks, and number of plies. Although the degree of curvature of tracks in regions 407 and 409 of figure 4 are depicted as the same, it will be appreciated that they may be different and/or individual; tracks within a region may have different degrees of curvature to others of the same region and so on.

Modifying a stiffness profile of a wing enables a degree of flexure, twist and/or change in angle of sweep of wing to vary in dependence on, e.g., the speed of the aircraft to which the wing is attached. For example, at a relatively higher speed, a wing such as that depicted in figures 3 or 4, which is relatively stiffer at the root compared to the tip of the wing, will therefore display more elastic properties towards the tip. The stiffness profile described above with reference to figures 3 and 4 for example may be varied to accommodate different scenarios and use cases. For example, the opposite profile to that depicted with reference to figures 3 and 4 may be implemented in order to, e.g., reduce wing tip twist or flexure whilst minimizing wing skin weight (since, for example, relatively less material may be used towards the root of the wing skin). It will be appreciated that there are multiple different shapes and combinations of track/tracks that can be implemented in order provide a desired stiffness profile for a wing skin, and the above is not intended to be limiting but exemplary and as an aid to describing the manner in which tow shearing of a material can be used in the present context for, e.g., wings having relatively high or low aspect ratios.

According to an example, a composite structure for a component of a wing for an aircraft can be provided using, e.g., the process described above with reference to figure 2. As such, a lamination of multiple layers can be deposited according to the predetermined lamination profile, and at least one of the layers can comprise a non-linear tow of a first material defining a continuous track comprising at least one bend having a radius of curvature within range of around 40-100mm.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. A wing for an aircraft, the wing having a passive variable aeroelastic geometry for accommodating efficient flight at multiple aircraft speeds, the wing comprising:
a wing skin comprising a composite structure comprising a lamination of multiple layers deposited for the wing skin according to a predetermined lamination profile, at least one of the layers comprising a continuous non-linear deposition of material, the wing skin comprising a stiffness distribution profile defined by the lamination profile.

2. The wing as claimed in claim 1, wherein the wing defines a relatively low aspect ratio.

3. The wing as claimed in claim 1, wherein the wing defines a relatively high aspect ratio.

4. The wing as claimed in any preceding claim, wherein at least one of the layers comprises carbon fibre.

5. The wing as claimed in any preceding claim, wherein the non-linear deposition of material comprises a continuous track of material.

6. The wing as claimed in claim 5, wherein the continuous track of material comprises at least one bend having a radius of curvature within range of around 40-100mm.

7. The wing as claimed in claim 5 or 6, wherein a shape of the continuous track of material is defined, at least in part, on the basis of the predetermined lamination profile.

8. The wing as claimed in any of claims 5 to 7, wherein the continuous track of material is formed by way of continuous tow shearing of the material.

9. A method for fabricating a component of a wing for an aircraft, the method comprising:
depositing a layer of a first material, the layer comprising a non-linear tow of the first material, wherein the first layer of material is deposited as part of a lamination of multiple layers for the component.

10. The method as claimed in claim 9, wherein the non-linear tow of the first material defines a continuous track comprising at least one bend having a radius of curvature within range of around 40-100mm.

11. The method as claimed in claim 9 or 10, further comprising:
depositing the layer of the first material according to a predetermined lamination profile.

12. The method as claimed in claim any of claims 9 to 11, further comprising:
depositing the non-linear tow of the first material using continuous tow shearing.

13. The method as claimed in any of claims 9 to 12, wherein the non-linear tow of the first material comprises at least one bend having a radius of curvature within range of around 40-100mm.

14. The method as claimed in any of claims 9 to 13, further comprising:
depositing a second layer of a second material according to the predetermined lamination profile, the second layer comprising a non-linear tow of the second material comprising at least one bend having a radius of curvature within range of around 40-100mm.

15. A composite structure for a component of a wing for an aircraft, the composite structure comprising:
a lamination of multiple layers deposited according to a predetermined lamination profile, at least one of the layers comprising a non-linear tow of a first material defining a continuous track comprising at least one bend having a radius of curvature within range of around 40-100mm.
